# EUROPÄISCHE PATENTSCHRIFT

(11) **EP 2 502 541 B1**
(45) Veröffentlichungstag und Bekanntmachung des Hinweises auf die Patenterteilung: **31.08.2016**
(21) Anmeldenummer: 12160917.6
(22) Anmeldetag: 23.03.2012
(51) Int. Cl.: A47L 15/24, A47L 15/46, C02F 1/00, C02F 5/10, A47L 15/00

(54) **Verfahren zum Betrieb einer Dosierpumpe und zugehörige Dosiervorrichtung**
Method for operating a metering pump and metering pump
Procédé de fonctionnement d'une pompe de dosage et dispositif de dosage correspondant

(30) Priorität: 25.03.2011 DE 102011006176
(43) Veröffentlichungstag der Anmeldung: 26.09.2012
(73) Patentinhaber: Judo Wasseraufbereitung GmbH, 71364 Winnenden (DE)
(72) Erfinder: Dopslaff, Carsten H., 71364 Winnenden (DE); Haug, Alexander, 71686 Remseck (DE)
(74) Vertreter: Kohler Schmid Möbus Patentanwälte

(56) Entgegenhaltungen:
- EP-A2- 0 305 897
- DE-A1- 3 911 028
- DE-A1- 19 652 733
- DE-A1- 19 857 544
- DE-U1- 9 416 521

## Beschreibung

Die Erfindung betrifft ein Verfahren zum Betrieb einer Dosierpumpe, wobei mit der Dosierpumpe ein Wasserkonditionierungsmittel in zu behandelndes Wasser, insbesondere einen Strom von zu behandelndem Wasser, zudosiert wird, so dass ein behandeltes Wasser erhalten wird.

In Haushalt und Industrie werden in vielfältiger Weise wasserführende Systeme eingesetzt, insbesondere Heiz- und Kühlkreisläufe. Für eine optimale Funktion des wasserführenden Systems ist es oftmals vorgesehen, das im System geführte Wasser geeignet zu behandeln (aufzubereiten), typischerweise bei Befüllung oder Auffüllung des Systems. Eine häufige Art der Wasseraufbereitung ist der Zusatz von Wasserkonditionierungsmitteln zum zu behandelnden Wasser. Beispielsweise kann durch Zusatz von Härtestabilisierungsmitteln ein Ausfällen von Kalk im wasserführenden System vermieden oder vermindert werden, oder auch durch Zusatz von Korrosionsschutzmitteln eine korrosionsbedingte Leckage von Leitungen im wasserführenden System langfristig verhindert werden.

Das Wasserkonditionierungsmittel wird in der Regel mit einer Dosierpumpe dem zu behandelnden Wasser zugegeben, welches typischerweise an einem Dosierauslass der Dosierpumpe vorbeiströmt. Die notwendige Menge von Wasserkonditionierungsmittel hängt grundsätzlich von der Qualität und der Menge des zu behandelnden Wassers ab. Beispielsweise braucht ein weiches Wasser weniger Zusatz von Härtestabilisierungsmittel als ein hartes Wasser. Ebenso braucht bei geringen Mengen an vorbeiströmendem, zu behandelndem Wasser auch nur eine geringe Menge Wasserkonditionierungsmittel zugesetzt werden.

EP 0 720 579 B1 offenbart eine Dosierpumpe für ein Schmiermittelkonzentrat, die über einen Durchflussmesser für den Frischwasserzufluss gesteuert wird; bei einer festen zuströmenden Frischwassermenge wird eine konstante Menge an Konzentrat zudosiert. Werden unterschiedliche Konzentrationen gewünscht, so wird vorgeschlagen, mehrere Dosierpumpen zu verwenden. Der apparative Aufwand steigt entsprechend.

EP 2 248 769 A2 zeigt ein Verfahren zur Reinigung von Abwasser mittels einer Dosierung von Chemikalien, insbesondere Fällungsmitteln. Mit Hilfe von Informationen über das zugeführte Rohwasser, das zu behandelnde Abwasser und/oder das gereinigte Abwasser wird die Menge der zu dosierenden Chemikalien berechnet. Als Informationen dienen der mit einem Wasserzähler ermittelte Wasserverbrauch und gegebenenfalls die Temperatur, der pH-Wert, der Druck und Informationen über das Abwasserreinigungsresultat. Genaue Details zur Steuerung der Dosierung anhand des Abwasserreinigungsresultats sind nicht offenbart. Zudem ist der apparative Aufwand groß, um entsprechende Informationen zu erhalten.

DE 198 52 164 A1 beschreibt ein Verfahren, bei dem ein Produkt P in ein Lösungsmittel LM, beispielsweise Wasser, dosiert wird. Die Konzentration des Produktes P in der Lösung L wird mittels einer Leitfähigkeitsmesszelle überwacht. Der Beitrag des Lösungsmittels LM zur Leitfähigkeit der Lösung L wird nicht bestimmt. Ein Korrekturfaktor K soll die Konzentration von Produkten, deren Kennlinien nicht im Datenspeicher abgespeichert ist, berücksichtigen. Näheres zum Korrekturfaktor K ist jedoch nicht offenbart.

In der DE 34 00 263 C2 wird eine Desinfektionsmittellösung aus Wasser und Desinfektionsmittelkonzentrat mit Hilfe einer Dosiereinrichtung hergestellt. Eine Leitfähigkeitssonde in der Desinfektionsmittellösung überwacht deren Konzentration. Das Verfahren setzt voraus, dass die Leitfähigkeit des Wassers deutlich durch Hinzugabe von Desinfektionsmittelkonzentrat verändert wird.

DE 196 52 733 A1 beschreibt ein Dosierverfahren zum Zuführen eines Reinigers zu einer Geschirrspülmaschine.Die Geschirrspülmaschine umfasst mehrere Reinigungstanks, wobei nur am ersten Reinigungstank Reiniger zugesetzt wird. Die Reinigerkonzentration in diesem Reinigungstank wird über die Leitfähigkeit überwacht und auf einen Sollwert mittels eines Fuzzy-Reglers eingeregelt. Der Reiniger wird durch Auflösen eines Reinigerpulvers in einem Pulverbehälter gewonnen.

### Aufgabe der Erfindung

Es ist die Aufgabe der vorliegenden Erfindung, ein einfaches und kostengünstiges Verfahren zum Betrieb einer Dosierpumpe vorzustellen, mit dem die Dosierleistung der Dosierpumpe bei schwankender Qualität eines zu behandelnden Wassers optimiert werden kann.

### Kurze Beschreibung der Erfindung

Diese Aufgabe wird gelöst durch ein Verfahren zum Betrieb einer Dosierpumpe, wobei mit der Dosierpumpe ein Wasserkonditionierungsmittel in zu behandelndes Wasser, insbesondere einen Strom von zu behandelndem Wasser, zudosiert wird, so dass ein behandeltes Wasser erhalten wird,
wobei eine erste elektrische Leitfähigkeit L1 des zu behandelnden Wassers und eine zweite elektrische Leitfähigkeit L2 des behandelten Wassers oder des Wassers eines Wasservorrats, dem das behandelte Wasser zugeführt wird, bestimmt wird,
wobei in einer Steuereinheit mittels einer Sollwertfunktion DLFₛₒₗₗ (L1) aus der ersten Leitfähigkeit L1 ein Sollwert DLFₛₒₗₗ ermittelt wird, wobei die Sollwertfunktion DLFₛₒₗₗ(L1) mit der ersten Leitfähigkeit L1 variiert,
und wobei die Steuereinheit die Dosierpumpe so ansteuert, dass eine Differenz DLF=L2-L1 der bestimmten Leitfähigkeiten L1 und L2 auf den Sollwert DLFₛₒₗₗ eingeregelt wird.

Durch die Erfassung der Leitfähigkeiten L1 und L2 mit dem erfindungsgemäßen Verfahren kann sowohl die dosierte Menge an Wasserkonditionierungsmittel überwacht, als auch die zu dosierende Menge an die vorhandene Wasserqualität angepasst werden. Gemäß der Erfindung wird dafür die Differenz der Leitfähigkeiten DLF=L2-L1 auf die Sollwertfunktion DLF_{Soll}(L1), die eine Funktion der ersten Leitfähigkeit L1 ist, eingeregelt; mit anderen Worten DLF_{Soll} = f(L1). Dabei ist über die Dosierleistung der Dosierpumpe (also der geförderten Menge an Wasserkonditionierungsmittel) die zweite Leitfähigkeit L2 veränderbar.

Die erste Leitfähigkeit L1 ermittelt die (und ermöglicht damit die Berücksichtigung der) im behandelten Wasser bzw. im Wasservorrat bereits vor der Dosierung des Wasserkonditionierungsmittels vorhandenen Ionen und damit die Wasserqualität des zu behandelnden Wassers. Über die Abhängigkeit der Sollwertfunktion von der ersten Leitfähigkeit L1 kann eine der Qualität des zu behandelnden Wassers entsprechende Zudosierung ausgewählt werden.

Das zudosierte Wasserkonditionierungsmittel verändert (typischerweise erhöht) die elektrische Leitfähigkeit L2 im behandelten Wasser bzw. im Wasservorrat, dem das behandelte Wasser zufließt. Die Leitfähigkeitsdifferenz L2 - L1 erfasst somit die Menge an zudosiertem Wasserkonditionierungsmittel; der Einfluss der bereits vor der Zudosierung vorhandenen Ionen im Wasser wird durch die Differenzbildung in guter Näherung herausgerechnet. Jeder Leitfähigkeitsdifferenz L2 - L1 lässt sich eine definierte Konzentration an zudosiertem Wasserkonditionierungsmittel zuordnen. Im Rahmen der Erfindung ist es insbesondere nicht nötig (und typsicherweise auch nicht eingerichtet), dass die erste Leitfähigkeit L1 vernachlässigbar klein ist gegenüber der zweiten Leitfähigkeit L2, um das zudosierte Wasserkonditionierungsmittel erfassen zu können.

Wasserkonditionierungsmittel können im Rahmen der Erfindung beispielsweise Härtestabilisationsmittel, Korrosionsschutzmittel oder Desinfektionsmittel sein.

Die erste Leitfähigkeit L1 kann im Rahmen der Erfindung als ein Maß für die Härte des unbehandelten Wassers eingesetzt werden. Ist die erste Leitfähigkeit L1 und damit die Härte des unbehandelten Wassers groß, so muss entsprechend viel Härtestabilisationsmittel dosiert werden. Durch mehr Härtestabilisationsmittel steigt die zweite Leitfähigkeit L2 an. Demzufolge wird der Sollwert DLF_{Soll} mit steigender erster Leitfähigkeit L1 höher gewählt, um eine optimale Dosierung zu erreichen.

Die erste Leitfähigkeit L1 ist auch ein Maß für die Korrosionswahrscheinlichkeit eines Werkstoffes, der dem unbehandelten Wasser ausgesetzt ist. Die Korrosionswahrscheinlichkeit nimmt in der Regel mit der Anzahl an Ladungsträgern im unbehandelten Wasser und damit mit steigender erster Leitfähigkeit L1 zu. Ist die erste Leitfähigkeit L1 groß, so muss auch mehr Korrosionsschutzmittel zudosiert werden, und der Sollwert DLF_{Soll} ist dementsprechend ebenfalls groß zu wählen.

Je kleiner die im zu behandelnden Wasser gemessene erste Leitfähigkeit L1 ist, desto weicher ist das Wasser und desto geringer ist die Härte und auch die Korrosionswahrscheinlichkeit aufgrund einer geringen Anzahl an Ladungsträgern. Es müssen in diesem Fall weniger Wasserkonditionierungsmittel zudosiert werden. Der Sollwert DLF_{Soll} kann dann entsprechend kleiner gewählt werden.

Die Sollwertfunktion DLF_{Soll}(L1) ist in der Regel in einer elektronischen Steuereinheit der Dosierpumpe abgespeichert. Die Sollwertfunktion ist typischerweise eine als Gerade verlaufende Kennlinie (was deren rechnerische Beschreibung erleichtert); es sind aber auch nicht-lineare Funktionen (etwa angenähert durch Polynome) oder auch tabellarisch hinterlegte Funktionen (Wertetabellen) möglich; bei tabellarisch hinterlegten Funktionen werden typischerweise verschiedenen L1-Intervallen jeweils verschiedene Sollwerte DLFₛₒₗₗ zugewiesen.

Wasserkonditionierungsmittel sind häufig Mischungen verschiedener Substanzen. Die im Rahmen der Erfindung erfasste Leitfähigkeit stellt einen Summenparameter dar, der alle Komponenten erfasst, die als Ladungsträger fungieren, während ionenselektive Elektroden lediglich einen Teil der Ionen in einer Mischung erfassen würden. Leitfähigkeitssensoren zur Steuerung einer Dosierpumpe sind außerdem kostengünstiger und weniger störungsanfällig als ionenselektive Elektroden.

Die Leitfähigkeiten L1 und L2 können mit nur einem Leitfähigkeitssensor (mit Messung von L1 vor der Dosierung oder während einer (kurzen) Dosierpause einerseits sowie Messung von L2 während der Betriebsphase der Dosierpumpe andererseits) oder mit zwei Leitfähigkeitssensoren (vor und hinter der Dosierpumpe) bestimmt werden. L1 und L2 werden bevorzugt in regelmäßigen Abständen (etwa nach festen Zeitintervallen oder jeweils nach einer bestimmten behandelten Wassermenge) gemessen, insbesondere durch einen oder mehrere eigene, mit der elektronischen Steuereinheit der Dosierpumpe verbundene Sensoren; bevorzugt erfolgen zyklische und/oder ständige Messungen, um Schwankungen in der Qualität des zu behandelnden Wassers schnell zu erkennen und schnell auf diese reagieren zu können.

Die Erfindung gestattet insgesamt eine einfache und genaue Steuerung der Dosierpumpe, wobei die Dosierleistung automatisch an die Wasserqualität angepasst wird.

### Bevorzugte Varianten der Erfindung

Bei einer bevorzugten Variante des erfindungsgemäßen Betriebsverfahrens ist vorgesehen, dass die Sollwertfunktion DLFₛₒₗₗ(L1) mit steigender erster Leitfähigkeit L1 zunimmt,
insbesondere wobei das Wasserkonditionierungsmittel ein Härtestabilisationsmittel und/oder ein Korrosionsschutzmittel ist. Bei steigender erster Leitfähigkeit L1 nimmt die Konzentration an (in der Regel behandlungsbedürftigen) Ionen im zu behandelnden Wasser zu; entsprechend sollte mehr Wasserkonditionierungsmittel eingesetzt werden. Durch Zusatz der meisten Wasserkonditionierungsmitteln nimmt die Leitfähigkeit L2 im behandelten Wasser zu; entsprechend wird in der erfindungsgemäßen Variante dann auch die Differenz L2-L1 durch einen höheren Sollwert DLFₛₒₗₗ hochgeregelt. Man beachte, dass durch manche Wasserkonditionierungsmittel (etwa Fällungsmittel) auch eine Verminderung der zweiten Leitfähigkeit L2 im Vergleich zu L1 eintreten kann; in diesen Fällen kommt auch eine abnehmende Sollwertfunktion DLFₛₒₗₗ(L1) mit steigender erster Leitfähigkeit L1 in Betracht, wobei die Sollwertfunktion DLFₛₒₗₗ(L1) auch negativ werden kann (entsprechend L2<L1).

Besonders bevorzugt ist eine Verfahrensvariante, bei der die erste Leitfähigkeit L1 und die zweite Leitfähigkeit L2 mit zwei separaten Leitfähigkeitssensoren bestimmt werden. Dadurch kann die Leitfähigkeit L1 unabhängig von Dosierungsunterbrechungen jederzeit bestimmt werden. Dies vereinfacht und präzisiert die Dosierpumpensteuerung.

Bei einer alternativen Verfahrensvariante Verfahren werden die erste Leitfähigkeit L1 und die zweite Leitfähigkeit L2 beide mit demselben Leitfähigkeitssensor bestimmt, welcher hinter der Dosierpumpe angeordnet ist, wobei für die Messung der ersten Leitfähigkeit L1 das Zudosieren unterbrochen wird. Für diese Variante wird nur ein Leitfähigkeitssensor benötigt, wodurch Baukosten gespart werden.

Besonders bevorzugt ist vorgesehen, dass die zweite Leitfähigkeit L2 kontinuierlich oder quasikontinuierlich oder in definierten Abständen bestimmt und für die Ansteuerung der Dosierpumpe ausgewertet wird. Dadurch wird eine gute Kontrolle der Dosiermittelmenge möglich. Definierte Abstände sind hier typischerweise zeitlich periodisch, etwa alle Minute, oder jeweils nach Behandlung einer bestimmten Wassermenge, wofür ein Durchflussmesser eingesetzt werden kann.

Ebenfalls besonders bevorzugt ist es, wenn die erste Leitfähigkeit L1 kontinuierlich oder quasikontinuierlich oder in definierten Abständen bestimmt und für die Bestimmung des Sollwerts DLFₛₒₗₗ sowie die Ansteuerung der Dosierpumpe ausgewertet wird. Dadurch wird eine gute Kontrolle der Wasserqualität des zu behandelnden Wassers möglich. Definierte Abstände sind hier typischerweise zeitlich periodisch, etwa alle Stunde, oder bei bestimmten Anlässen, etwa zu (bzw. vor) Beginn eines jeden Dosiervorgangs.

Vorteilhaft ist weiterhin eine Verfahrensvariante, bei der die Sollwertfunktion auch eine Funktion des pH-Werts des zu behandelnden Wassers, des behandelten Wassers oder des Wassers im Wasservorrat ist, entsprechend DLFₛₒₗₗ (L1, pH), wobei die Sollwertfunktion DLFₛₒₗₗ(L1, pH) mit dem pH-Wert variiert. Der pH-Wert beeinflusst das Kalk-Kohlensäure-Gleichgewicht und damit die Calcitabscheidekapazität im zu behandelnden Wasser. Je höher die Calcitabscheidekapazität ist, desto mehr Härtestabilisationsmittel muss zudosiert werden, der Sollwert DLF_{Soll} erhöht sich dann entsprechend. Ebenso beeinflusst der pH-Wert des Wassers entscheidend das Korrosionsverhalten eines Werkstoffs, so dass je nach pH-Wert mehr oder weniger Korrosionsschutzmittel zudosiert werden muss. Beispielsweise bildet Aluminium in Wasser im pH-Wert-Bereich von 6,5 bis 8,5 stabile Deckschichten, so dass in diesem Bereich wenig Korrosionsschutzmittel benötigt wird, während außerhalb dieses Bereiches die Korrosionsneigung stark zunimmt. Der Sollwert DLF_{Soll} erhöht sich dann mit zunehmender Korrosionswahrscheinlichkeit. In der elektronischen Steuereinheit der Dosierpumpe kann beispielsweise eine Kennlinie abgespeichert sein, die einem gemessenen pH-Wert einen Korrekturfaktor zuordnet, mit dem ein Standardsollwert in einen dem vorliegenden pH-Wert angepassten Sollwert umgerechnet wird. Der pH-Wert kann vorab bestimmt und einer elektronischen Steuereinheit bekannt gegeben werden, oder (bevorzugt) online mittels einer pH-Elektrode (bevorzugt kontinuierlich oder quasikontinuierlich) erfasst werden.

Bei einer besonders vorteilhaften Verfahrensvariante ist vorgesehen, dass die Sollwertfunktion auch eine Funktion der Temperatur T des zu behandelnden Wassers, des behandelten Wassers oder des Wassers im Wasservorrat ist, entsprechend DLFₛₒₗₗ(L1, T), wobei die Sollwertfunktion DLFₛₒₗₗ(L1, T) mit der Temperatur T variiert. Die Calcitabscheidekapazität steigt mit zunehmender Temperatur, so dass bei höherer Temperatur entsprechend mehr Härtestabilisationsmittel zudosiert werden muss, um Kalkausfall zu verhindern. Folglich erhöht sich der Sollwert DLF_{Soll} mit zunehmender Temperatur. Ebenso laufen viele Korrosionsvorgänge bevorzugt bei erhöhten Temperaturen ab. Die gemessenen Leitfähigkeiten sind außerdem temperaturabhängig und können entsprechend korrigiert werden. In der elektronischen Steuereinheit der Dosierpumpe kann beispielsweise eine Kennlinie abgespeichert sein, die einer gemessenen Temperatur einen Korrekturfaktor zuordnet, mit dem ein Standardsollwert in einen der vorliegenden Temperatur angepassten Sollwert umgerechnet wird. Die Temperatur wird bevorzugt am Einsatzort des behandelten Wassers gemessen, beispielsweise in einem Heizkreislauf.

Bei einer bevorzugten Weiterentwicklung dieser Variante wird das Zudosieren unterbrochen, wenn die Temperatur T einen Grenzwert T_{GW} unterschreitet. Bei niedrigen Temperaturen verringert sich die Kalkausfällung, und es wird weniger Härtestabilisationsmittel benötigt. In diesem Fall kann das Zudosieren unter Umständen (zeitweise während sehr niedriger Temperaturen) ganz entfallen, wodurch Härtestabilisationsmittel gespart und Verschleiß verringert wird. Niedrige Temperaturen können beispielsweise bei einer Nachtabsenkung in einem Heizkreislauf auftreten.

Besonders bevorzugt ist auch eine Verfahrensvariante, bei der die Sollwertfunktion DLFₛₒₗₗ(L1) durch die Auswahl eines oder mehrerer Zusatzparameter an der Steuereinheit abgeändert wird, insbesondere wobei die Zusatzparameter betreffen
- den oder die Werkstoffe, mit denen das behandelte Wasser in Kontakt kommt, und/oder
- die Art und/oder das Behandlungsziel des Wasserkonditionierungsmittels.
Die Menge bzw. Konzentration an z.B. zudosiertem Korrosionsschutzmittel ist abhängig vom Werkstoff, der geschützt werden soll. Zum Schutz von unedleren Metallen wie verzinkte Eisenwerkstoffe oder Aluminium wird mehr Korrosionsschutzmittel dosiert, während Werkstoffe wie Edelstahl oder Kunststoffe weniger bzw. nicht korrosionsanfällig sind.
Neben der Konzentration der Wasserkonditionierungsmittel beeinflusst auch deren Art selbst die zweite Leitfähigkeit L2 und damit DLFₛₒₗₗ. Beispielsweise besitzen kurzkettige Phosphate eine höhere Beweglichkeit und damit eine höhere Leitfähigkeit als langkettige Polyphosphate; dies kann durch eine entsprechende Abänderung der Sollwertfunktion berücksichtigt werden. Phosphatmischungen werden beispielsweise als Härtestabilisationsmittel und Korrosionsschutzmittel eingesetzt. Es können unterschiedliche Mengen an Phosphaten benötigt werden, je nachdem, welches Problem vorrangig gelöst werden soll bzw. welches Problem wie akut auftritt ("Behandlungsziel"). Der Sollwert DLFₛₒₗₗ variiert entsprechend.
Die Art des zu schützenden Werkstoffs bzw. die Art oder das Behandlungsziel des Wasserkonditionierungsmittels kann über eine Eingabevorrichtung an die elektronische Steuereinheit der Dosierpumpe übermittelt werden.
Die Abänderung der Sollwertfunktion kann beispielsweise jeweils über einen Korrekturfaktor erfolgen.

Bei einer bevorzugten Verfahrensvariante ist vorgesehen, dass das behandelte Wasser als Wasservorrat einem Heiz- oder Kühlkreislauf zugeführt wird, wobei mittels eines Drucksensors der Druck p im Heiz- oder Kühlkreislauf gemessen wird, und wobei Wasserkonditionierungsmittel nur dann zudosiert wird, wenn der Druck p in einem Bereich liegt, in welchem eine Nachspeisung von Wasser in den Heiz- oder Kühlkreislauf stattfindet. Sinkt der Druck im Kreislauf unter einen Schwellenwert, so wird Wasser nachgespeist. Dies kann automatisch mittels eines druckgesteuertem Ventils durchgeführt werden. Wasserkonditionierungsmittel werden gemäß der Variante nur in den Zeiten dosiert, in denen Wasser in den Kreislauf gefüllt bzw. nachgefüllt wird. Dies vereinfacht die Verabreichung des Wasserkonditionierungsmittels in den Kreislauf.

Vorteilhaft ist auch eine Verfahrensvariante, die vorsieht, dass das behandelte Wasser als Wasservorrat einem Heiz- oder Kühlkreislauf zugeführt wird, und dass die zweite Leitfähigkeit L2 im Heiz- oder Kühlkreislauf bestimmt wird. Die zweite Leitfähigkeit L2 wird nicht in einem Zulauf zum Kreislauf, sondern im Kreislauf selbst bestimmt. Es wird damit sicher gestellt, dass keine Aufkonzentration an Wasserkonditionierungsmittel im Kreislauf stattfindet.

Bei einer alternativen, ebenfalls vorteilhaften Verfahrensvariante wird die Dosierpumpe in einen Strom von zu behandelndem Wasser zudosiert und die zweite Leitfähigkeit L2 im behandelten Wasser bestimmt. In diesem Fall kann aus der zweiten Leitfähigkeit L2 (bzw. der Differenz L2-L1) unmittelbar auf die Konzentration von Wasserkonditionierungsmittel im behandelten Wasser geschlossen werden. Verdünnungseffekte in einem Wasservorrat beeinflussen dann die Steuerung der Dosierpumpe nicht, wodurch die Steuerung vereinfacht wird.

Vorteilhaft ist auch eine Verfahrensvariante, bei der nach einem Zeitintervall t1 Elektroden eines oder mehrerer Leitfähigkeitssensoren abgereinigt werden, insbesondere wobei das Zeitintervall t1 mit zunehmender erster Leitfähigkeit L1 und/oder zweiter Leitfähigkeit L2 verkürzt wird. Durch die regelmäßige Abreinigung können Verfälschungen von Leitfähigkeitsmessungen durch Kalkbeläge oder andere Ablagerungen (etwa von Wasserkonditionierungsmitteln) vermindert werden. Mit zunehmender Leitfähigkeit L1 steigt die Härte im Wasser (was mehr Kalkbeläge verursachen kann), und mit zunehmender Leitfähigkeit L2 steigt die Konzentration an zudosierten Wasserkonditionierungsmitteln (was Ablagerungen von Wasserkonditionierungsmittel begünstigt), daher kann durch frühere Abreinigung bei höheren L1 oder L2 eine Verbesserung der Messzuverlässigkeit erreicht werden. Die Abreinigung kann manuell oder automatisch erfolgen. Die manuelle Abreinigung kann beispielsweise über einen Signalgeber angezeigt werden. Eine automatische Abreinigung kann durch Spülen der Elektrodenoberfläche mit Säure erfolgen.

In den Rahmen der vorliegenden Erfindung fällt auch eine Dosiervorrichtung, insbesondere zur Durchführung eines obigen erfindungsgemäßen Verfahrens, umfassend
- eine Dosierpumpe mit einem Vorratsbehälter für Wasserkonditionierungsmittel,
- mindestens einen Leitfähigkeitssensor zur Bestimmung einer ersten elektrischen Leitfähigkeit L1 eines zu behandelnden Wassers und einer zweiten elektrischen Leitfähigkeit L2 eines behandelten Wassers oder eines Wassers eines Vorratsbehälters, dem behandeltes Wasser zufließt,
- eine elektronische Steuereinheit zur Ansteuerung der Dosierpumpe, ausgebildet zur Einregelung einer Differenz DLF=L2-L1 auf einen Sollwert DLFₛₒₗₗ,
wobei die Steuereinheit einen Speicher aufweist, in welchem eine Sollwertfunktion DLFₛₒₗₗ(L1) abgelegt ist, mit der aus der ersten Leitfähigkeit L1 der Sollwert DLFₛₒₗₗ bestimmbar ist, wobei die Sollwertfunktion DLFₛₒₗₗ(L1) mit der ersten Leitfähigkeit L1 variiert. Mit der erfindungsgemäßen Dosiervorrichtung ist eine zuverlässige Überwachung der Dosierleistung bei gleichzeitig automatischer Anpassung der Dosierleistung an die Qualität eines zu behandelnden Wassers möglich. Über- und Unterdosierungen von Wasserkonditionierungsmittel werden vermieden.

Eine bevorzugte Ausführungsform der erfindungsgemäßen Vorrichtung ist dadurch gekennzeichnet, dass die Vorrichtung einen pH-Sensor und/oder einen Temperatursensor aufweist. Mit dem pH-Sensor und dem Temperatursensor können Parameter ermittelt werden, auf Grundlage derer die Sollwertfunktion abgeändert werden kann bzw. die in der Sollwertfunktion als weitere Variable (zusätzlich zu L1) berücksichtigt werden können, um die Dosierleistung weiter zu optimieren.

Ebenfalls bevorzugt ist eine Ausführungsform, bei der die Vorrichtung eine Abreinigungsvorrichtung für Elektroden des mindestens einen Leitfähigkeitssensors aufweist. Mittels der Abreinigungsvorrichtung können Kalkablagerungen oder andere Beläge an den Elektroden, die die Leitfähigkeitsmessung verfälschen, entfernt werden. Im Rahmen der Erfindung können insbesondere mechanische Abreinigungsvorrichtungen wie Bürsten oder Abstreifer, oder auch Mittel für eine Säurespülung vorgesehen sein.

Weitere Vorteile der Erfindung ergeben sich aus der Beschreibung und der Zeichnung. Ebenso können die vorstehend genannten und die noch weiter ausgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

### Detaillierte Beschreibung der Erfindung und Zeichnung

Die Erfindung ist in der Zeichnung dargestellt und wird anhand von Ausführungsbeispielen näher erläutert. Es zeigen:
- Fig. 1: ein Ablaufdiagramm einer beispielhaften Variante des erfindungsgemäßen Betriebsverfahrens;
- Fig. 2: eine schematische Darstellung einer ersten Ausführungsform einer erfindungsgemäßen Dosiervorrichtung zur Durchführung des erfindungsgemäßen Verfahrens, mit je einem Leitfähigkeitssensor im Zulaufwasser und im behandelten Wasser;
- Fig. 3: eine schematische Darstellung einer zweiten Ausführungsform einer erfindungsgemäßen Dosiervorrichtung zur Behandlung von Zulaufwasser für einen Heizkreislauf;
- Fig. 4: ein Diagramm einer Sollwertfunktion DLFₛₒₗₗ(L1) des erfindungsgemäßen Verfahrens.

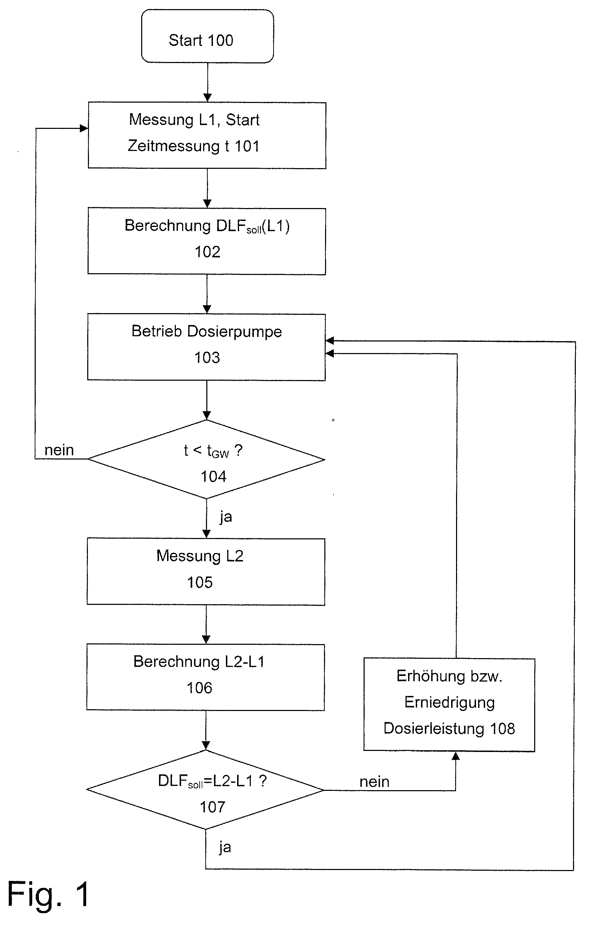

Die **Figur 1** zeigt ein schematisches Ablaufdiagramm des erfindungsgemäßen Verfahrens zum Betrieb einer Dosierpumpe.

Nach dem Start des Verfahrens 100 wird zunächst eine Messung der ersten Leitfähigkeit L1 des zu behandelnden Wassers durchgeführt 101. Ebenso wird eine Zeitmessung (mit Zeitzählgröße t) gestartet, um eine erneute Messung der ersten Leitfähigkeit L1 vorzubereiten. Die gemessene erste Leitfähigkeit L1 wird in einer elektronischen Steuereinheit ausgewertet, wobei mittels einer dort hinterlegten Sollwertfunktion DLFₛₒₗₗ(L1) ein zur gemessenen Leitfähigkeit L1 gehörender Sollwert DLFₛₒₗₗ ermittelt wird 102. Falls weitere Messwerte (wie der pH-Wert oder die Temperatur) typischerweise gemeinsam mit L1 ermittelt wurden oder auch Zusatzparameter (wie die Art des Wasserkonditionierungsmittels) vorgegeben wurden, werden diese bei der Ermittlung des Sollwerts DLFₛₒₗₗ mit berücksichtigt.

In der gezeigten Verfahrensvariante beginnt sodann der Betrieb der Dosierpumpe 103, wobei in dieser ersten Betriebsphase für die Dosierleistung mit einem vorgegebenen Standardwert gearbeitet werden kann. Mit der Dosierpumpe wird Wasserkonditionierungsmittel dem zu behandelnden Wasser zugesetzt.

Sodann erfolgt eine Überprüfung, ob die Zeitzählgröße t noch unterhalb eines Zeitgrenzwertes t_{Gw} (welcher die maximale Gültigkeitsdauer der letzten Messung der Leitfähigkeit L1 definiert) liegt 104. Falls nicht, erfolgt eine erneute Messung von L1, wobei das Verfahren bei Schritt 101 fortgesetzt wird.

Falls die Zeitzählgröße t den Zeitgrenzwert t_{GW} noch nicht erreicht hat (was auf jeden Fall im erstmaligen Durchlauf des Schrittes 104 nach einem Schritt 101 der Fall ist), wird das Verfahren mit der Messung der zweiten Leitfähigkeit L2 im behandelten Wasser oder dem Wasser eines Wasservorrats, dem das behandelte Wasser zufließt, fortgesetzt 105.

Sodann wird mittels der elektronischen Steuereinheit die Differenz der beiden gemessenen Leitfähigkeiten L2-L1 bestimmt 106. Anschließend wird diese experimentell bestimmte Differenz L2-L1 mit dem in Schritt 102 bestimmten Sollwert DLFₛₒₗₗ verglichen 107. Falls die experimentell bestimmte Differenz L2-L1 dem Sollwert DLFₛₒₗₗ entspricht (was typischerweise angenommenen wird, wenn L2-L1 um weniger als einen gewissen Prozentsatz, etwa 5% bezogen auf den Sollwert, vom Sollwert DLFₛₒₗₗ abweicht), wird das Verfahren mit dem Betrieb der Dosierpumpe bei 103 fortgesetzt, wobei die bisherige Dosierleistung der Dosierpumpe beibehalten wird.

Falls die experimentell bestimmte Differenz L2-L1 vom Sollwert DLFₛₒₗₗ merklich abweicht (um mehr als einen gewissen Prozentsatz, etwa 5% bezogen auf den Sollwert), so wird in Schritt 108 die Dosierleistung der Dosierpumpe angepasst. Wenn das Wasserkonditionierungsmittel die Leitfähigkeit L2 erhöht, so wird im Falle von L2-L1 < DLFₛₒₗₗ die Dosierleistung erhöht, und im Falle von L2-L1 > DLFₛₒₗₗ die Dosierleistung erniedrigt. Dabei kann die Erhöhung oder Erniedrigung der Dosierleistung auch abhängig von der prozentualen Abweichung gewählt werden (etwa proportional zur prozentualen Abweichung), um ein besonders rasches Einregeln zu erreichen. Mit der solchermaßen angepassten (geänderten) Dosierleistung wird nun mit dem Betrieb der Dosierpumpe bei Schritt 103 fortgefahren.

In den folgenden Messungen von L2 in Schritt 105, den Vergleichsschritten 107 und ggf. Anpassungen der Dosierleistung 108 wird die Dosierleistung weiter nachgeregelt. Typischerweise erfolgen mehrere Zyklen der Schritte 103-108, bis eine erneute (ebenfalls zyklische) Messung von L1 in Schritt 101 ansteht. Man beachte, dass im Falle von veränderlichen Wasserströmen von unbehandeltem Wasser an der Dosierpumpe die Dosierleistung grundsätzlich auch unter Berücksichtigung des aktuellen Wasserstroms erfolgen sollte, welcher mit einem Durchflussmesser überwacht werden kann; meist wird dann die Dosierleistung proportional an die Stärke des Wasserstroms angepasst.

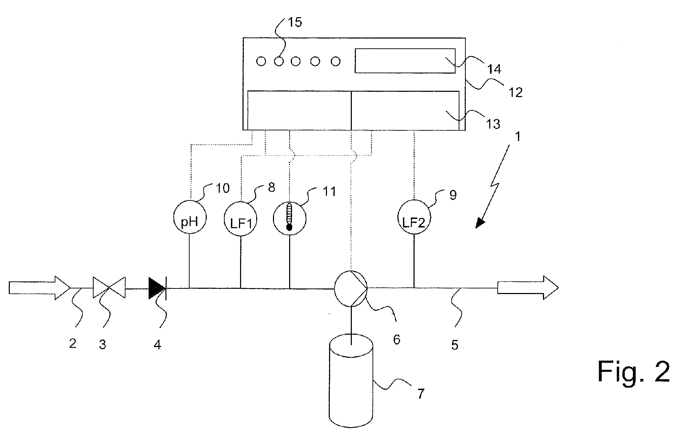

In der **Figur 2** ist eine erste Ausführungsform einer erfindungsgemäßen Dosiervorrichtung (Dosieranlage) 1 dargestellt, mit der das erfindungsgemäße Verfahren ausgeführt werden kann.

Über einen Zulauf 2 fließt der Dosiervorrichtung 1 ein Strom von zu behandelndem Wasser (etwa Frischwasser einer Trinkwasserversorgung) zu. Die Dosiervorrichtung 1 kann zulaufseitig mittels eines Absperrventils 3 vom Wasserzulauf abgetrennt werden; weiterhin ist ein Rücklaufverhinderer (Rückschlagventil) 4 vorgesehen, um einen rückwärtigen Fluss von Wasserkonditionierungsmittel in den Bereich des Zulaufs 2 jenseits des Rücklaufverhinderers 4 auszuschließen.

Das zuströmende Wasser passiert dann einen pH-Sensor (pH-Meter) 10, einen ersten Leitfähigkeitssensor 8, welcher die erste Leitfähigkeit L1 des zu behandelnden Wassers bestimmt, und einen Temperatursensor (Thermometer) 11. Sodann erreicht das zuströmende Wasser die Dosierpumpe 6. Diese ist mit einem Vorratsgefäß 7 mit Wasserkonditionierungsmittel verbunden und kann dem vorbeiströmenden Wasser eine einstellbare Menge an Wasserkonditionierungsmittel zusetzen. Das mit Wasserkonditionierungsmittel versetzte (behandelte) Wasser fließt über einen Ablauf 5 einer nachgeschalteten Wasserinstallation (nicht dargestellt) zu. Im Ablauf ist ein zweiter Leitfähigkeitssensor 9 vorgesehen, mit welchem die zweite Leitfähigkeit L2 (hier) des behandelten Wassers gemessen wird. Beide Leitfähigkeitssensoren 8, 9 verfügen über nicht näher dargestellte Abreinigungsvorrichtungen zur Abreinigung ihrer Elektroden. Man beachte, dass die Leitfähigkeit L1 des zu behandelnden (unbehandelten) Wassers auch mit dem zweiten Leitfähigkeitssensor 9 in einer Dosierpause gemessen werden kann, und der erste Leitfähigkeitssensor 8 dann entfallen kann.

Die Dosierleistung der Dosierpumpe 6 wird mittels einer elektronischen Steuereinheit 12 kontrolliert. Die elektronische Steuereinheit 12 wertet die Informationen des pH-Sensors 10, des Temperatursensors 11 und des ersten Leitfähigkeitssensors 8 sowie von Zusatzparametern (etwa die Art und der Behandlungszweck des Wasserkonditionierungsmittels), die über eine Eingabevorrichtung 15 eingegeben wurden und an einem Display 14 eingesehen werden können, aus. Die elektronische Steuereinheit 12 ermittelt dabei mittels einer in einem Speicher 13 hinterlegten, hier dreidimensionalen Sollwertfunktion DLFₛₒₗₗ(L1, T, pH), die gemäß der eingegebenen Zusatzparameter abgewandelt wurde, einen momentan gültigen Sollwert DLFₛₒₗₗ für die Differenz L2-L1 der gemessenen Leitfähigkeiten L1 und L2 vor und nach der Dosierpumpe 6 (es ist auch möglich, für verschiedene Zusatzparameterkonfigurationen verschiedene Sollwertfunktionen im Speicher 13 bereitzuhalten, was als gleichwirkend angesehen wird). Bei einer Abweichung der aus den Messwerten L1 und L2 bestimmten Differenz L2-L1 vom Sollwert DLFₛₒₗₗ passt die elektronische Steuereinheit 12 die Dosierleistung an der Dosierpumpe 6 nach Art eines Regelkreises an.

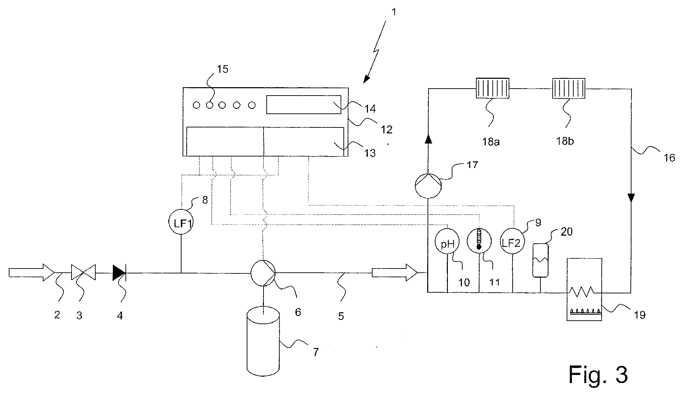

**Figur 3** zeigt eine zweite Ausführungsform einer erfindungsgemäßen Dosiervorrichtung 1, welche der Ausführungsform von Fig. 2 in großen Teilen entspricht. Im Folgenden werden daher die Unterschiede zur Ausführungsform von Fig. 2 erläutert.

Die Dosiervorrichtung 1 ist an einen Heizkreislauf 16 angeschlossen; behandeltes Wasser aus dem Ablauf 5 wird dem Heizkreislauf 16 zugeführt. Der Heizkreislauf 16 kann als ein Wasservorrat, dem das behandelte Wasser zufließt, aufgefasst werden. Der Heizkreislauf 16 versorgt zwei Heizkörper 18a, 18b mit warmem Wasser, wobei das Kreislaufwasser mittels einer Umwälzpumpe 17 umgepumpt und mittels eines Heizkessels 19 erwärmt wird. Weiterhin ist ein Membranausdehnungsgefäß 20 im Heizkreislauf 16 vorgesehen.

Zulaufseitig vor der Dosierpumpe 6 wird lediglich die erste Leitfähigkeit L1 des zu behandelnden Wassers gemessen. Der pH-Sensor 10, der Temperatursensor 11 und auch der zweite Leitfähigkeitssensor 9 sind im Heizkreislauf 16 angeordnet und messen daher die Eigenschaften des Wassers im Heizkreislauf 16.

Durch die Messung der Parameter pH, Temperatur T und der zweiten Leitfähigkeit L2 im Heizkreislauf 16 können die Eigenschaften des Kreislaufwassers, insbesondere der dortige Gehalt an Wasserkonditionierungsmittel, unmittelbar kontrolliert werden. Es braucht insbesondere nicht ein Verdünnungsprozess zwischen Ablauf 5 und Heizkreislauf 16 rechnerisch nachverfolgt zu werden. Allmähliche Veränderungen des Kreislaufwassers, etwa in Folge von Korrosionsprozessen oder Ablagerungen, die sich in der zweiten Leitfähigkeit L2 auswirken, können zuverlässig erkannt und beim Auffüllen des Kreislaufwassers wieder ausgeglichen werden.

Man beachte, dass der Heizkreislauf 16 typischerweise nur gelegentlich aufgefüllt wird, bevorzugt wenn ein Druck p im Heizkreislauf 16 unter einen Grenzwert p_{GW} abgefallen ist. Der Heizkreislauf 16 verfügt zur Überwachung des Drucks p über einen nicht näher dargestellten Drucksensor, beispielsweise dem Heizkessel 19 nachgeschaltet. Nur bei diesem Auffüllen erfolgt im gezeigten Beispiel eine Dosierung von Wasserkonditionierungsmittel. Dazu wird über den Zulauf 2 mit dem geöffnetem Absperrventil 3 ein Frischwasserstrom eröffnet und das Wasserkonditionierungsmittel von der Dosierpumpe in den Strom dosiert. Der Strom von behandeltem Wasser wird in den Heizkreislauf 16 zugeführt. Es kann für die Regelung der Dosierleistung vorteilhaft sein, nach einer Änderung der Dosierleistung an der Pumpe zunächst ein wenig zuzuwarten, bis eine merkliche Menge an behandeltem Wasser in den Heizkreislauf 16 gelangt ist und mit dem Kreislaufwasser ausreichend vermischt worden ist, und erst dann eine erneute Messung von L2 vorzunehmen und für eine Anpassung der Dosierleistung auszuwerten. Dadurch können Falschdosierungen vermieden werden.

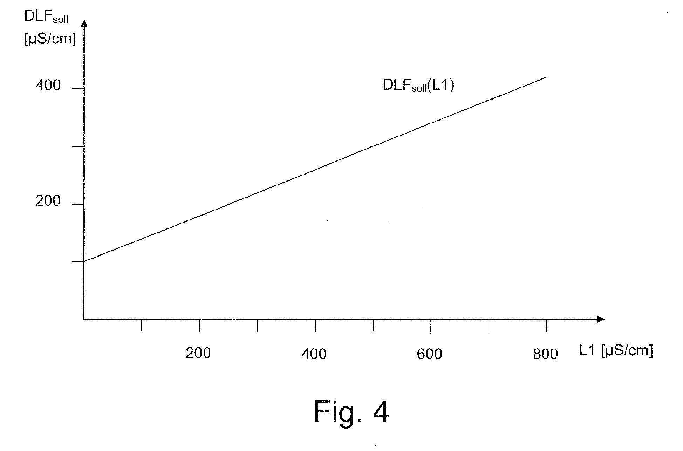

**Fig. 4** zeigt beispielhaft eine Sollwertfunktion DLFₛₒₗₗ(L1), wie sie im Rahmen der Erfindung beispielsweise bei einem Korrosionsschutzmittel für eine wasserführende Industrieanlage eingesetzt werden kann. Die Sollwertfunktion verläuft hier als eine gerade Kennlinie, wobei die Sollwertfunktion mit zunehmender erster Leitfähigkeit L1 des zu behandelnden Wassers zunimmt. Dadurch wird der zunehmenden Korrosionsneigung bei höheren Ionengehalten des zu behandelnden Wassers Rechnung getragen.

Um einen ebenfalls gemessenen pH-Wert im zu behandelnden Wasser bei der Dosierung des Korriosionsschutzmittels Rechnung zu tragen, kann der über die Kennlinie der Fig. 4 ermittelte Sollwert DLFₛₒₗₗ mit einem Korrekturfaktor KF multipliziert werden, welcher vom pH-Wert abhängig ist. Bei Verwendung von Aluminium als Werkstoff in einer nachfolgenden Wasserinstallation ist beispielsweise bei einem pH zwischen 6,5 und 8,5 nur wenig Korrosionsschutz nötig, da sich Passivierungsschichten ausbilden. Außerhalb dieses pH-Intervalls ist die Korrosionsneigung erhöht, insbesondere bei sehr niedrigen (sauren) und sehr hohen (basischen) pH-Werten. Beispielsweise kann dann ein vom pH-Wert abhängiger Korrekturfaktor KF gemäß folgender Tabelle 1 eingesetzt werden:

**Tabelle 1**

| pH-Wert | kleiner 5 | 5 bis 6,4 | 6,5 bis 8,5 | 8,6 bis 10 | größer 10 |
|---|---|---|---|---|---|
| Korrekturfaktor KF | 4 | 2,5 | 0,5 | 2,0 | 4 |

Durch Anwendung des pH-abhängigen Korrekturfaktors KF ist die Sollwertfunktion damit insgesamt effektiv zweidimensional DLFₛₒₗₗ(L1, pH).

Ebenfalls berücksichtigt werden können Zusatzparameter, die beispielsweise die Art des vor Korrosion zu schützenden Werkstoffs beschreiben. Die in der Tabelle 1 angegebenen Korrekturfaktoren sind für Aluminium-Werkstoffe bestimmt. Wird durch einen Zusatzparameter angegeben, dass ausschließlich unlegierte oder niedrig legierte Eisenwerkstoffe in der nachfolgenden Wasserinstallation enthalten sind, so kann beispielsweise der Korrekturfaktor KF im pH-Intervall 6,5 bis 8,5 auf 2,0 erhöht und im pH-Intervall 8,6 bis 10 auf 0,5 gesenkt werden. Mit dieser Abwandlung der Sollwertfunktion DLFₛₒₗₗ(L1,pH) wird berücksichtigt, das Eisenwerkstoffe keine vergleichbaren Passivierungsschichten ausbilden wie Aluminium und sich in leicht alkalischen Medien unkritisch verhalten.

Man beachte, dass für Heizkreisläufe in der Regel deutlich engmaschigere pH-Wert-Intervalle für Korrekturfaktoren KF definiert werden als in Tabelle 1 angegeben, wobei extreme pH-Werte durch Normen bzw. Richtlinien (etwa des VDI) meist ausgeschlossen sind.

### Bezugszeichenliste

- 1:: Dosiervorrichtung
- 2:: Zulauf
- 3:: Absperrventil
- 4:: Rückflussverhinderer
- 5:: Ablauf
- 6:: Dosierpumpe
- 7:: Vorratsgefäß
- 8, 9:: erster und zweiter Leitfähigkeitssensor
- 10:: pH-Sensor
- 11:: Temperatursensor
- 12:: Elektronische Steuereinheit
- 13:: Speicher
- 14:: Display
- 15:: Eingabevorrichtung
- 16:: Heizkreislauf
- 17:: Umwälzpumpe
- 18a,b:: Heizkörper
- 19:: Heizkessel
- 20:: Membranausdehnungsgefäß
- 100:: Start
- 101:: Messung L1, Start Zeitmessung t
- 102:: Berechnung DLFₛₒₗₗ(L1)
- 103:: Betrieb Dosierpumpe
- 104:: Abfrage t < t_{GW} ?
- 105:: Messung L2
- 106:: Berechnung L2-L1
- 107:: Abfrage DLFₛₒₗₗ=L2-L1 ?
- 108:: Erhöhung/Erniedrigung Dosierleistung

## Patentansprüche

1. Verfahren zum Betrieb einer Dosierpumpe (6),
wobei mit der Dosierpumpe (6) ein Wasserkonditionierungsmittel in zu behandelndes Wasser, insbesondere einen Strom von zu behandelndem Wasser, zudosiert wird, so dass ein behandeltes Wasser erhalten wird, wobei eine erste elektrische Leitfähigkeit L1 des zu behandelnden Wassers und eine zweite elektrische Leitfähigkeit L2 des behandelten Wassers oder des Wassers eines Wasservorrats, dem das behandelte Wasser zugeführt wird, bestimmt wird (101, 105),
**dadurch gekennzeichnet, dass** in einer Steuereinheit (12) mittels einer Sollwertfunktion DLFₛₒₗₗ(L1) aus der ersten Leitfähigkeit L1 ein Sollwert DLFₛₒₗₗ ermittelt wird (102), wobei die Sollwertfunktion DLFₛₒₗₗ(L1) mit der ersten Leitfähigkeit L1 variiert,
und die Steuereinheit (12) die Dosierpumpe (6) so ansteuert, dass eine Differenz DLF=L2-L1 der bestimmten Leitfähigkeiten L1 und L2 auf den Sollwert DLFₛₒₗₗ eingeregelt wird.

2. Verfahren nach Anspruch 1, **dadurch gekennzeichnet, dass** die Sollwertfunktion DLFₛₒₗₗ(L1) mit steigender erster Leitfähigkeit L1 zunimmt,
insbesondere wobei das Wasserkonditionierungsmittel ein Härtestabilisationsmittel und/oder ein Korrosionsschutzmittel ist.

3. Verfahren nach einem der Ansprüche 1 oder 2, **dadurch gekennzeichnet, dass** die erste Leitfähigkeit L1 und die zweite Leitfähigkeit L2 mit zwei separaten Leitfähigkeitssensoren (8, 9) bestimmt werden.

4. Verfahren nach einem der Ansprüche 1 oder 2, **dadurch gekennzeichnet, dass** die erste Leitfähigkeit L1 und die zweite Leitfähigkeit L2 beide mit demselben Leitfähigkeitssensor (9) bestimmt werden, welcher hinter der Dosierpumpe (6) angeordnet ist, wobei für die Messung der ersten Leitfähigkeit L1 das Zudosieren unterbrochen wird.

5. Verfahren nach einem der vorhergehenden Ansprüche, **dadurch gekennzeichnet, dass** die zweite Leitfähigkeit L2 kontinuierlich oder quasikontinuierlich oder in definierten Abständen bestimmt (105) und für die Ansteuerung der Dosierpumpe (6) ausgewertet wird.

6. Verfahren nach einem der vorhergehenden Ansprüche, **dadurch gekennzeichnet, dass** die erste Leitfähigkeit L1 kontinuierlich oder quasikontinuierlich oder in definierten Abständen bestimmt (101) und für die Bestimmung des Sollwerts DLFₛₒₗₗ sowie die Ansteuerung der Dosierpumpe (6) ausgewertet wird.

7. Verfahren nach einem der vorhergehenden Ansprüche, **dadurch gekennzeichnet, dass** die Sollwertfunktion auch eine Funktion des pH-Werts des zu behandelnden Wassers, des behandelten Wassers oder des Wassers im Wasservorrat ist, entsprechend DLFₛₒₗₗ (L1, pH), wobei die Sollwertfunktion DLFₛₒₗₗ(L1, pH) mit dem pH-Wert variiert.

8. Verfahren nach einem der vorhergehenden Ansprüche, **dadurch gekennzeichnet, dass** die Sollwertfunktion auch eine Funktion der Temperatur T des zu behandelnden Wassers, des behandelten Wassers oder des Wassers im Wasservorrat ist, entsprechend DLFₛₒₗₗ (L1, T), wobei die Sollwertfunktion DLFₛₒₗₗ (L1, T) mit der Temperatur T variiert.

9. Verfahren nach Anspruch 8, **dadurch gekennzeichnet, dass** das Zudosieren unterbrochen wird, wenn die Temperatur T einen Grenzwert T_{GW} unterschreitet.

10. Verfahren nach einem der vorhergehenden Ansprüche, **dadurch gekennzeichnet, dass** die Sollwertfunktion DLFₛₒₗₗ(L1) durch die Auswahl eines oder mehrerer Zusatzparameter an der Steuereinheit (12) abgeändert wird,
insbesondere wobei die Zusatzparameter betreffen
- den oder die Werkstoffe, mit denen das behandelte Wasser in Kontakt kommt, und/oder
- die Art und/oder das Behandlungsziel des
Wasserkonditionierungsmittels.

11. Verfahren nach einem der vorhergehenden Ansprüche, **dadurch gekennzeichnet, dass** das behandelte Wasser als Wasservorrat einem Heiz- oder Kühlkreislauf (16) zugeführt wird, wobei mittels eines Drucksensors der Druck p im Heiz- oder Kühlkreislauf gemessen wird, und wobei Wasserkonditionierungsmittel nur dann zudosiert wird, wenn der Druck p in einem Bereich liegt, in welchem eine Nachspeisung von Wasser in den Heiz- oder Kühlkreislauf stattfindet.

12. Verfahren nach einem der Ansprüche 1 bis 11, **dadurch gekennzeichnet, dass** das behandelte Wasser als Wasservorrat einem Heiz- oder Kühlkreislauf (16) zugeführt wird,
und dass die zweite Leitfähigkeit L2 im Heiz- oder Kühlkreislauf (16) bestimmt wird.

13. Verfahren nach einem der Ansprüche 1 bis 11, **dadurch gekennzeichnet, dass** die Dosierpumpe (6) in einen Strom von zu behandelndem Wasser zudosiert und die zweite Leitfähigkeit L2 im behandelten Wasser bestimmt wird.

14. Verfahren nach einem der vorhergehenden Ansprüche, **dadurch gekennzeichnet, dass** nach einem Zeitintervall t1 Elektroden eines oder mehrerer Leitfähigkeitssensoren (8, 9) abgereinigt werden, insbesondere wobei das Zeitintervall t1 mit zunehmender erster Leitfähigkeit L1 und/oder zweiter Leitfähigkeit L2 verkürzt wird.

15. Dosiervorrichtung (1), insbesondere zur Durchführung eines Verfahrens nach einem der vorhergehenden Ansprüche, umfassend
- eine Dosierpumpe (6) mit einem Vorratsbehälter (7) für Wasserkonditionierungsmittel,
- mindestens einen Leitfähigkeitssensor (8, 9) zur Bestimmung einer ersten elektrischen Leitfähigkeit L1 eines zu behandelnden Wassers und einer zweiten elektrischen Leitfähigkeit L2 eines behandelten Wassers oder eines Wassers eines Vorratsbehälters, dem behandeltes Wasser zufließt,
- eine elektronische Steuereinheit (12) zur Ansteuerung der Dosierpumpe (6), **dadurch gekennzeichnet, dass** die elektronische Steuereinheit zur Einregelung einer Differenz DLF=L2-L1 auf einen Sollwert DLFₛₒₗₗ, ausgebildet ist, wobei die Steuereinheit (12) einen Speicher (13) aufweist, in welchem eine Sollwertfunktion DLFₛₒₗₗ(L1) abgelegt ist, mit der aus der ersten Leitfähigkeit L1 der Sollwert DLFₛₒₗₗ bestimmbar ist, wobei die Sollwertfunktion DLFₛₒₗₗ(L1) mit der ersten Leitfähigkeit L1 variiert.

16. Vorrichtung (1) nach Anspruch 15, **dadurch gekennzeichnet, dass** die Vorrichtung einen pH-Sensor (10) und/oder einen Temperatursensor (11) aufweist.

17. Vorrichtung (1) nach Anspruch 15 oder 16, **dadurch gekennzeichnet, dass** die Vorrichtung (1) eine Abreinigungsvorrichtung für Elektroden des mindestens einen Leitfähigkeitssensors (8, 9) aufweist.

## Claims

1. Method for operating a dosing pump (6), the dosing pump (6) being used for adding a water conditioning agent to water to be treated, in particular a flow of water to be treated, such that treated water is obtained, wherein a first electrical conductivity L1 of the water to be treated and a second electrical conductivity L2 of the treated water or of the water of a water supply, to which the treated water is supplied, is determined (101, 105),
**characterized in that**
in a control unit (12) a desired value DLFₛₒₗₗ is determined from the first conductivity L1 by means of a desired value function DLFₛₒₗₗ(L1), wherein the desired value function DLFₛₒₗₗ(L1) varies with the first conductivity L1,
and the control unit (12) drives the dosing pump (6) in such a manner that a difference DLF=L2-L1 of the determined conductivities L1 and L2 is adjusted to the desired value DLFₛₒₗₗ.

2. Method according to claim 1, **characterized in that** the desired value function DLFₛₒₗ(L1) increases with increasing first conductivity L1, in particular wherein the water conditioning agent is a hardness stabilizing agent and/or an anti-corrosion agent.

3. Method according to any one of the claims 1 or 2, **characterized in that** the first conductivity L1 and the second conductivity L2 are determined using two separate conductivity sensors (8, 9).

4. Method according to any one of the claims 1 or 2, **characterized in that** the first conductivity L1 and the second conductivity L2 are both determined using the same conductivity sensor (9) which is arranged downstream of the dosing pump (6), wherein adding is interrupted for measuring the first conductivity L1.

5. Method according to any one of the preceding claims, **characterized in that** the second conductivity L2 is determined (105) continuously or quasi-continuously or in defined intervals and evaluated for driving the dosing pump (6).

6. Method according to any one of the preceding claims, **characterized in that** the first conductivity L1 is determined (101) continuously or quasi-continuously or in defined intervals and evaluated for determining the desired value DLFₛₒₗₗ and for driving the dosing pump (6).

7. Method according to any one of the preceding claims, **characterized in that** the desired value function is also a function of the pH value of the water to be treated, of the treated water or of the water in the water supply, corresponding to DLFₛₒₗₗ(L1, pH), wherein the desired value function DLFₛₒₗₗ(L1, pH) varies with the pH value.

8. Method according to any one of the preceding claims, **characterized in that** the desired value function is also a function of the temperature T of the water to be treated, of the treated water or of the water in the water supply, corresponding to DLFₛₒₗₗ(L1, T), wherein the desired value function DLFₛₒₗₗ(L1, T) varies with the temperature T.

9. Method according to claim 8, **characterized in that** adding is interrupted when the temperature T falls below a limit value T_{GW}.

10. Method according to any one of the preceding claims, **characterized in that** the desired value function DLFₛₒₗₗ(L1) is changed by selection of one or more additional parameters on the control unit (12),
in particular, wherein the additional parameters concern
- the material(s) with which the treated water comes into contact and/or
- the type of the water conditioning agent and/or the goal of treatment of the water conditioning agent.

11. Method according to any one of the preceding claims, **characterized in that** the treated water is supplied as a water supply to a heating or cooling circuit (16), wherein the pressure p in the heating or cooling circuit is measured by means of a pressure sensor, and wherein water conditioning agent is added only if the pressure p is within a range in which water is refilled into the heating or cooling circuit.

12. Method according to any one of the claims 1 to 11, **characterized in that** the treated water is supplied as a water supply to a heating or cooling circuit (16)
and that the second conductivity L2 is determined in the heating or cooling circuit (16).

13. Method according to any one of the claims 1 to 11, **characterized in that** the dosing pump (6) performs adding to a flow of water to be treated and the second conductivity L2 is determined in the treated water.

14. Method according to any one of the preceding claims, **characterized in that** after a time interval t1 electrodes of one or more conductivity sensors (8, 9) are cleaned, in particular wherein the time interval t1 is shortened with increasing first conductivity L1 and/or second conductivity L2.

15. Dosing device (1), in particular for performing a method according to any one of the preceding claims, comprising
- a dosing pump (6) with a storage container (7) for water conditioning agent,
- at least one conductivity sensor (8, 9) for determining a first electrical conductivity L1 of water to be treated and a second electrical conductivity L2 of treated water or water of a storage container into which treated water flows,
- an electronic control unit (12) for driving the dosing pump (6), **characterized in that** the electronic control unit is designed to adjust a difference DLF=L2-L1 to a desired value DLFₛₒₗₗ, wherein the control unit (12) has a storage (13) in which a desired value function DLFₛₒₗₗ(L1) is stored by means of which the desired value DLFₛₒₗₗ can be determined from the first conductivity L1, wherein the desired value function DLFₛₒₗₗ(L1) varies with the first conductivity L1.

16. Device (1) according to claim 15, **characterized in that** the device comprises a pH sensor (10) and/or a temperature sensor (11).

17. Device (1) according to claim 15 or 16, **characterized in that** the device (1) comprises a cleaning device for electrodes of the at least one conductivity sensor (8, 9).

## Revendications

1. Procédé de fonctionnement d'une pompe de dosage (6),
un agent de conditionnement d'eau étant ajouté de manière dosée à de l'eau à traiter, en particulier un courant d'eau à traiter, avec la pompe de dosage (6), de façon à obtenir une eau traitée,
une première conductivité électrique L1 de l'eau à traiter et une deuxième conductivité électrique L2 de l'eau traitée, ou de l'eau d'une réserve d'eau qui est amenée à l'eau traitée, étant déterminées (101, 105),
**caractérisé en ce que**
dans une unité de commande (12), une valeur de consigne DLFₛₒₗₗ est déterminée (102) à partir de la première conductivité L1 au moyen d'une fonction de valeur de consigne DLFₛₒₗₗ(L1), la fonction de valeur de consigne DLFₛₒₗₗ(L1) variant avec la première conductivité L1,
et l'unité de commande (12) commande la pompe de dosage (6) de façon à régler une différence DLF=L2-L1 des conductivités L1 et L2 déterminées à la valeur de consigne DLFₛₒₗₗ.

2. Procédé selon la revendication 1, **caractérisé en ce que** la fonction de valeur de consigne DLFₛₒₗₗ(L1) croît lorsque la première conductivité L1 augmente,
l'agent de conditionnement d'eau étant en particulier un agent de stabilisation de dureté et/ou un agent de protection contre la corrosion.

3. Procédé selon l'une des revendications 1 ou 2, **caractérisé en ce que** la première conductivité L1 et la deuxième conductivité L2 sont déterminées avec deux capteurs de conductivité (8, 9) séparés.

4. Procédé selon l'une des revendications 1 ou 2, **caractérisé en ce que** la première conductivité L1 et la deuxième conductivité L2 sont déterminées toutes les deux avec le même capteur de conductivité (9), lequel est disposé derrière la pompe de dosage (6), l'ajout dosé étant interrompu pour la mesure de la première conductivité L1.

5. Procédé selon l'une des revendications précédentes, **caractérisé en ce que** la deuxième conductivité L2 est déterminée de façon continue ou quasi continue ou à intervalles définis (105) et évaluée pour la commande de la pompe de dosage (6).

6. Procédé selon l'une des revendications précédentes, **caractérisé en ce que** la première conductivité L1 est déterminée de façon continue ou quasi continue ou à intervalles définis (101) et évaluée pour la détermination de la valeur de consigne DLFₛₒₗₗ ainsi que la commande de la pompe de dosage (6).

7. Procédé selon l'une des revendications précédentes, **caractérisé en ce que** die fonction de valeur de consigne est aussi une fonction du pH de l'eau à traiter, de l'eau traitée ou de l'eau dans la réserve d'eau, correspondant à DLFₛₒₗₗ(L1, pH), la fonction de valeur de consigne DLFₛₒₗₗ(L1, pH) variant avec le pH.

8. Procédé selon l'une des revendications précédentes, **caractérisé en ce que** la fonction de valeur de consigne est aussi une fonction de la température T de l'eau à traiter, de l'eau traitée ou de l'eau dans la réserve d'eau, correspondant à DLFₛₒₗₗ(L1, T), la fonction de valeur de consigne DLFₛₒₗₗ(L1, T) variant avec la température T.

9. Procédé selon la revendication 8, **caractérisé en ce que** l'ajout dosé est interrompu lorsque la température T devient inférieure à une valeur limite T_{GW.}

10. Procédé selon l'une des revendications précédentes, **caractérisé en ce que** la fonction de valeur de consigne DLFₛₒₗₗ(L1) est modifiée par la sélection d'un ou plusieurs paramètres supplémentaires sur l'unité de commande (12),
les paramètres supplémentaires concernant en particulier
- le ou les matériaux avec lesquels l'eau traitée entre en contact, et/ou
- la nature et/ou l'objectif de traitement de l'agent de conditionnement d'eau.

11. Procédé selon l'une des revendications précédentes, **caractérisé en ce que** l'eau traitée utilisée comme réserve d'eau est amenée à un circuit de chauffage ou de refroidissement (16), la pression p dans le circuit de chauffage ou de refroidissement étant mesurée à l'aide d'un capteur de pression, et de l'agent de conditionnement d'eau étant ajouté de manière dosée seulement lorsque la pression p se situe dans une plage dans laquelle un appoint d'eau a lieu dans le circuit de chauffage ou de refroidissement.

12. Procédé selon l'une des revendications 1 à 11, **caractérisé en ce que** l'eau traitée utilisée comme réserve d'eau est amenée à un circuit de chauffage ou de refroidissement (16),
et que la deuxième conductivité L2 est déterminée dans le circuit de chauffage ou de refroidissement (16).

13. Procédé selon l'une des revendications 1 à 11, **caractérisé en ce que** la pompe de dosage (6) effectue l'ajout dosé dans un courant d'eau à traiter et la deuxième conductivité L2 est déterminée dans l'eau traitée.

14. Procédé selon l'une des revendications précédentes, **caractérisé en ce qu'**après un intervalle de temps t1, les électrodes d'un ou de plusieurs capteurs de conductivité (8, 9) sont nettoyées, en particulier l'intervalle de temps t1 étant raccourci lorsque la première conductivité L1 et/ou la deuxième conductivité L2 augmentent.

15. Dispositif de dosage (1), en particulier pour mettre en oeuvre un procédé selon l'une des revendications précédentes, comprenant
- une pompe de dosage (6) avec un réservoir de stockage (7) pour un agent de conditionnement d'eau,
- au moins un capteur de conductivité (8, 9) pour déterminer une première conductivité électrique L1 d'une eau à traiter et une deuxième conductivité électrique L2 d'une eau traitée ou d'une eau d'un réservoir de stockage auquel de l'eau traitée est amenée,
- une unité de commande électronique (12) pour commander la pompe de dosage (6),
**caractérisé en ce que**
l'unité de commande électronique est conçue pour régler une différence DLF=L2-L1 à une valeur de consigne DLFₛₒₗₗ,
l'unité de commande (12) présentant une mémoire (13) dans laquelle est enregistrée une fonction de valeur de consigne DLFₛₒₗₗ(L1) qui permet de déterminer la valeur de consigne DLFₛₒₗₗ à partir de la première conductivité L1, la fonction de valeur de consigne DLFₛₒₗₗ(L1) variant avec la première conductivité L1.

16. Dispositif (1) selon la revendication 15, **caractérisé en ce que** le dispositif présente un capteur de pH (10) et/ou un capteur de température (11).

17. Dispositif (1) selon la revendication 15 ou 16, **caractérisé en ce que** le dispositif (1) présente un dispositif de nettoyage pour les électrodes dudit au moins un capteur de conductivité (8, 9).
